# EUROPÄISCHE PATENTSCHRIFT

(11) **EP 1 040 262 B1**
(45) Veröffentlichungstag und Bekanntmachung des Hinweises auf die Patenterteilung: **14.07.2004**
(21) Anmeldenummer: 99957914.7
(22) Anmeldetag: 19.10.1999
(51) Int. Cl.: F02C 9/26, F02C 9/46

(54) **BRENNSTOFFZUMESS-SYSTEM**
FUEL DOSING SYSTEM
SYSTEME DE DOSAGE DE CARBURANT

(30) Priorität: 21.10.1998 DE 19848434
(43) Veröffentlichungstag der Anmeldung: 04.10.2000
(73) Patentinhaber: MTU Aero Engines GmbH, 80995 München (DE)
(72) Erfinder: SCHWAMM, Friedrich, D-85604 Zorneding (DE)
(74) Vertreter: Einsele, Rolf W.
(86) Internationale Anmeldenummer: PCT/DE1999/003350
(87) Internationale Veröffentlichungsnummer: WO 2000/023700

(56) Entgegenhaltungen:
- EP-A- 0 288 412
- DE-A- 19 545 987
- US-A- 2 510 617
- US-A- 4 195 971
- US-A- 4 667 639
- US-A- 4 736 582

## Beschreibung

Die Erfindung betrifft ein Brennstoffzumesssystem für ein Turboluftstrahltriebwerk, gemäß dem Oberbegriff der Patentansprüche 1 und 2.

Ein gattungsgemäßes Brennstoffzumesssystem findet Anwendung beim Triebwerk EJ 200 im Flugzeug Jäger 90/EFA. Hierbei ist die Druckregeleinrichtung als selbsttätig arbeitendes, nur vom Differenzdruck am Hauptzumessventil beeinflusstes Druckregelventil ausgeführt. Die Noteinrichtung bildet ein separates, vom Triebwerksregler gesteuertes Notventil. Bei ungewolltem Öffnen des Hauptzumessventils wird das Notventil vom Triebwerksregler angesteuert, damit durch Rezirkulation die zum Triebwerk gelangende Brennstoffmenge begrenzt wird. Das Öffnen des Notventils bewirkt jedoch ein simultanes Schließen des selbsttätigen Druckregelventils, welches den Druckabfall am Hauptzumessventil konstant halten möchte. Damit kompensiert das Druckregelventil die Wirkung des Notventils während des Umschaltvorganges von Normal- auf Notbetrieb. Während dieser "Totzeit" kommt es durch Brennstoffüberschuss bis zum wirksamen Eingreifen des Notventils zu Drehzahlüberschwingern von bis zu 15 %. Diese müssen bei der Festigkeitsauslegung der rotierenden Triebwerksbauteile berücksichtigt werden, wodurch diese schwerer und voluminöser ausfallen.

Derartige Brennstoffzumesssysteme werden auch in EP 0 288 412 A2 und US 4,736,582 offenbart. Hierin liegen die verschiedenen Komponenten des Brennstoffzumesssystems ebenfalls als einzelne Bauteile vor, die steuerungstechnisch nicht miteinander verbunden sind und somit nur auf Basis einer hydro-mechanischen Regelung über kommunizierende Brennstoffleitungen gesteuert werden.

Demgegenüber besteht die Aufgabe der Erfindung darin, ein Brennstoffzumesssystem zu schaffen, welches Drehzahlüberschwinger vermeidet und somit eine festigkeits- und gewichtsmäßig günstigere Triebwerksauslegung ermöglicht.
Diese Aufgabe wird durch die im Anspruch 1 gekennzeichneten Merkmale gelöst, in Verbindung mit den gattungsbildenden Merkmalen in dessen Oberbegriff.

Das Wesen der Erfindung liegt darin, dass die Druckregelfunktion für das Hauptzumessventil und die Notfunktion bei ungewolltem Öffnen des Hauptzumessventils in einem einzigen Ventil, hier Rezirkulationsventil genannt, zusammengefasst sind, wobei beide Funktionen voll unter Kontrolle des Triebwerkreglers stehen, so dass nachteilige Kompensationseffekte vermieden werden. Nebenbei werden dadurch auch noch Bauteile und Gewicht eingespart.

Im den Unteransprüchen sind bevorzugte Ausgestaltungen des Brennstoffzumesssystems nach dem Hauptanspruch gekennzeichnet.

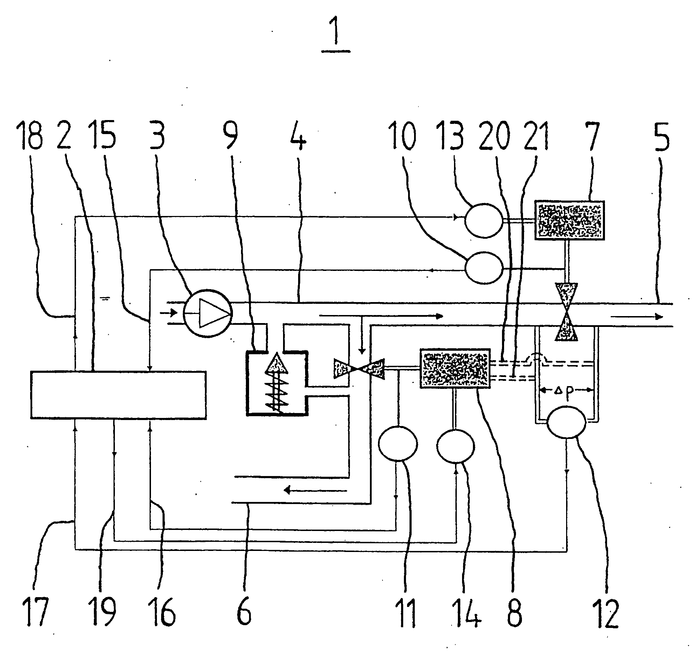

Die Erfindung wird anschließend anhand der Zeichnung noch näher erläutert.
Diese zeigt in schematischer Darstellung die wesentlichen Elemente eines Brennstoffzumesssystems.

Zu dem Brennstoffzumesssystem 1 gehört ein Leitungssystem für den Brennstoff, welches sich grob in eine Zuleitung 4, eine Versorgungsleitung 5 zum Triebwerk und eine Rezirkulationsleitung 6, welche z.B. in einen Brennstofftank zurückführt, einteilen lässt. Die Zuleitung 4 wird über eine Brennstoffpumpe 3 mit Brennstoff beaufschlagt. Der Maximaldruck im Leitungssystem wird von einem Druckbegrenzer 9 limitiert, welcher selbsttätig zur Rezirkulationsleitung 6 hin öffnet und konstruktiv in die Brennstoffpumpe 3 integriert sein kann. Ein zentrales Funktionselement ist das Hauptzumessventil 7, welches die Triebwerksversorgung mit Brennstoff steuert. Es weist einen Stellmotor 13 und einen Positionsgeber 10 auf, welche mittels Übertragungsleitungen 15, 18 regelungstechnisch mit dem elektronischen Triebwerksregler 2 verbunden sind. Ein Druckgeber 12 misst die Druckdifferenz Δ p über das Hauptzumessventil 7 und übermittelt den jeweiligen Wert durch die Übertragungsleitung 17 an den Triebwerksregler 2. Ein Rezirkulationsventil 8 mit Stellmotor 14 und Positionsgeber 11 ist mittels Übertragungsleitungen 16, 19 ebenfalls mit dem Triebwerksregler 2 verbunden. Im Hinblick auf seine Differenzdruckregelfunktion ist eine rein elektrische bzw. elektronische Regelung über den Weg Druckgeber 12 → Triebwerksregler 2 → Stellmotor 14 möglich. Alternativ zeigt die Figur eine hydraulische Druckübertragung direkt in das Rezirkulationsventil 8 über die - hier gestrichelten - Hydraulikleitungen 20,21, wobei der Brennstoff selbst das Hydraulikmedium dar stellt. Sowohl in der Druckregelfunktion als auch in der Notfunktion öffnet das Rezirkulationsventil 8 bedarfsweise eine Strömungsverbindung von der Zuleitung 4 zur Rezirkulationsleitung 6.
Abschließend sei noch erwähnt, dass das Brennstoffzumesssystem 1 für Turboluftstrahltriebwerke aller Art, also auch für Propeller-Turboluftstrahltriebwerke (Turboprop - Twke), geeignet ist.

## Patentansprüche

1. Brennstoffzumesssystem für ein Turboluftstrahltriebwerk, mit einer pumpengespeisten Zuleitung, mit einer Versorgungsleitung zum Triebwerk, mit einer Rezirkulationsleitung für überschüssigen Brennstoff, mit einem Hauptzumessventil am Übergang von der Zuleitung zur Versorgungsleitung, mit einer Druckregeleinrichtung zur Konstanthaltung der Druckdifferenz zwischen Ein- und Auslauf des Hauptzumessventils, mit einer Noteinrichtung zur Vermeidung von gefährlichen Überdrehzahlen mittels Begrenzung des Brennstoffstromes durch das Hauptzumessventil, falls dieses fehlerbedingt zu weit öffnet, und mit einem selbsttätig öffnenden Druckbegrenzer zur Limitierung des Maximaldruckes in der Zuleitung, wobei die Druckregeleinrichtung, die Noteinrichtung und der Druckbegrenzer bedarfsweise Strömungsverbindungen zur Rezirkulationsleitung freigeben, und wobei regelungstechnische Verbindungen des Hauptzumessventils und der Noteinrichtung mit einem elektronischen Triebwerksregler vorhanden sind, **dadurch gekennzeichnet, dass** die Druckregeleinrichtung und die Noteinrichtung gegen Überdrehzahlen in einem Rezirkulationsventil (8) zusammengefasst sind, welches eine motorische Verstellung (14), eine messtechnische Einrichtung zur Positionserfassung (11) und regelungstechnische Verbindungen (15, 19) zu einer Messeinrichtung für die Position (10) des Hauptzumessventils (7) aufweist, und dass für die Differenzdruckregelung mittels des Rezirkulationsventils (8) eine elektrische/elektronische Verbindung (17) von einer Messeinrichtung für die Druckdifferenz (12) am Hauptzumessventil (7) zum Triebwerksregler (2) oder eine direkte, hydraulische Verbindung (20,21) vom Hauptzumessventil (7) zum Rezirkulationsventil (8) vorhanden ist.

2. Brennstoffzumesssystem nach Anspruch 1, **dadurch gekennzeichnet, dass** der Druckbegrenzer (9) in eine Brennstoffpumpe (3) integriert ist.

## Claims

1. A fuel dosing system for a turbojet engine, having a supply line fed by a pump, a feed line connected to the engine, a recirculation line for excess fuel, a main dosing valve at the transition from the supply line to the feed line, a pressure regulating device to keep the pressure differential between the inlet and outlet of the main dosing valve constant, an emergency device for avoiding dangerous overspeeding by means of limiting the fuel flow through the main dosing valve in case said valve is opened to far due to a failure and an automatically opening pressure limiter to limit the maximum pressure in the supply line, the pressure regulating device, the emergency device and the pressure limiter releasing flow connections to the recirculation line as required, and connections from the main dosing valve and the emergency device to an electronic power unit regulator using control engineering techniques being provided,
**characterised in that**
the pressuring regulating device and the emergency device are combined to avoid overspeeding in a recirculation valve (8) which has a adjusting servomotor (14), a measuring device for recording position (11) and connections (15, 19) using control engineering techniques to a device for measuring the position (10) of the main dosing valve (7), and that an electric/electronic connection (17) from a device for measuring the differential pressure (12) at the main dosing valve (7) to the power unit regulator (2) or a direct, hydraulic connection (20, 21) from the main dosing valve (7) to the recirculation valve (8) is provided to regulate the differential pressure by means of the recirculation valve (18).

2. A fuel dosing system in accordance with claim 1,
**characterised in that**
the pressure limiter (9) is integrated in a fuel pump (3).

## Revendications

1. Système de dosage du combustible pour un turboréacteur, avec une conduite d'amenée alimentée par une pompe, avec une conduite d'alimentation vers le propulseur, avec une conduite de recirculation pour du combustible en surplus, avec une valve régulatrice principale au niveau de la transition entre la conduite d'amenée et la conduite d'alimentation, avec un dispositif de régulation de la pression pour maintenir constante la différence de pression entre l'entrée et la sortie de la valve régulatrice principale, avec un dispositif de secours pour empêcher les surrégimes dangereux grâce à la limitation du flux de combustible à travers la valve régulatrice principale, dans le cas où celle-ci s'ouvre de trop par erreur, et avec un limiteur de pression s'ouvrant de manière automatique pour la limitation de la pression maximale dans la conduite d'amenée, sachant que le dispositif de réglage de la pression, le dispositif de secours et le limiteur de pression libèrent selon le besoin des liaisons d'écoulement vers la conduite de recirculation, et sachant qu'il y a des liaisons techniques de régulation de la valve régulatrice principale et du dispositif de secours avec un régulateur électronique du propulseur, **caractérisé en ce que** le dispositif de régulation de la pression et le dispositif de secours pour les surrégimes sont réunis dans une soupape de recirculation (8) qui comporte un réglage (14) à moteur, un dispositif technique de mesure pour la saisie de la position (11) et des liaisons (15, 19) techniques de régulation vers un dispositif de mesure pour la position (10) de la valve régulatrice principale (7), et **en ce que** pour la régulation de la différence de pression au moyen de la soupape de recirculation (8), il y a une liaison (17) électrique/électronique partant d'un dispositif de mesure pour la différence de pression (12) sur la valve régulatrice principale (7) vers le régulateur de propulseur (2), ou une liaison (20, 21) directe et hydraulique partant de la valve régulatrice principale (7) vers la soupape de recirculation (8).

2. Système de dosage de combustible selon la revendication 1, **caractérisé en ce que** le limiteur de pression (9) est intégré dans une pompe à combustible (3).
